Europäisches Patentamt

European Patent Office

Office européen des brevets

(11) Numéro de publication: **0 214 056 B1**

# FASCICULE DE BREVET EUROPEEN

(45) Date de publication de fascicule du brevet:
22.05.91

(51) Int. Cl.⁵: **E06B 3/66**, E06B 5/16, C03C 27/12

(21) Numéro de dépôt: 86401897.3

(22) Date de dépôt: 29.08.86

(54) **Vitrage résistant au feu.**

(30) Priorité: 30.08.85 DE 3530968

(43) Date de publication de la demande:
11.03.87 Bulletin 87/11

(45) Mention de la délivrance du brevet:
22.05.91 Bulletin 91/21

(84) Etats contractants désignés:
**AT BE CH DE FR GB IT LI LU NL SE**

(56) Documents cités:
**DE-C- 2 713 849**

**UHLIG, H.H. Korrosion und Korrosionsschutz, Akademie-Verlag Berlin 1970, pages 236-250**

(73) Titulaire: **SAINT-GOBAIN VITRAGE INTERNA-TIONAL**
**18, avenue d'Alsace**
**F-92400 Courbevoie(FR)BE CH FR GB IT LI LU NL SE AT**

Titulaire: **VEGLA Vereinigte Glaswerke GmbH**
**Viktoriaallee 3-5**
**W-5100 Aachen(DE)DE**

(72) Inventeur: **Ortmans, Gunter, Dr.**
**Höfchensweg 121**
**W-5100 Aachen(DE)**
Inventeur: **Hassiepen, Michael, Dr.**
**Junkerstrasse 3a**
**W-5100 Aachen(DE)**

(74) Mandataire: **Leconte, Jean-Gérard et al**
**Saint-Gobain Recherche 39, Quai Lucien Lefranc**
**F-93304 Aubervilliers Cedex(FR)**

## Description

La présente invention se rapporte à un vitrage résistant au feu, se composant de deux plaques de verre maintenues à distance par un châssis ou cadre métallique, dont l'espace intercalaire est rendu étanche à le périphérie et est garni d'un hydrogel à teneur en sel, la phase aqueuse de l'hydrogel renfermant environ 70 à 90 % en poids d'eau et environ 10 à 30 % en poids d'un sel soluble dans l'eau.

Des vitrages résistants au feu de ce type sont connus par le brevet allemand DE-C 2 713 849. L'effet ignifuge de tels vitrages, en cas d'incendie, repose sur le fait que tout d'abord des quantités d'énergie considérables de la chaleur d'impact sont absorbées par évaporation de l'eau, et qu'un bouclier mousseux agissant contre la chaleur s'est formé à partir du sel, après l'évaporation de l'eau. Pendant l'évaporation de l'eau, la température du vitrage ne s'élève que de façon peu importante sur la surface détournée de l'action de la chaleur et elle reste largement en-dessous de la valeur admise selon la norme DIN 4102, qui est d'environ 140°C au-dessus de la température initiale. Dès que le bouclier mousseux contre la chaleur s'est formé pendant ou après l'évaporation de l'eau, celui-ci se charge par la suite de l'isolation thermique, et il empêche en particulier la pénétration du rayonnement thermique à travers le vitrage. En fonction de l'épaisseur de la couche de gel, on peut fabriquer de cette manière des vitrages de protection contre les incendies, qui correspondent aux classes de résistance au feu F30 ou F60 selon la norme DIN 4102, Partie 2 ; des vitrages de ce type réalisés avec trois plaques de verre correspondent, pour une épaisseur appropriée des couches, à la classe de résistance au feu F90.

Pour former un bouclier efficace contre la chaleur, une quantité suffisamment grande de sel doit être contenue dans la couche de gel, afin qu'une mousse cohérente, de consistance suffisante, se forme. Le sel doit en conséquence, posséder une solubilité proportionnellement élevée dans l'eau, et la solution de sel, de même que la structure du polymère formant le gel, ne doivent présenter ni trouble ni coloration, c'est-à-dire qu'ils doivent être nettement transparents. Les sels particulièrement appropriés pour la mise en oeuvre pratique dans ces conditions, à savoir les chlorures de sodium, de calcium, de magnésium ou les autres sels exercent cependant un effet fortement agressif et corrosif sur le métal du châssis séparant les plaques de verre. Même dans le cas de l'utilisation d'aciers, ou d'autres métaux comme le nickel et/ou le chrome, résistant à la corrosion, des corrosions peuvent apparaître sur le châssis d'écartement et si l'on rencontre des conditions défavorables, les produits de la corrosion peuvent se dissoudre dans le gel et conduire à des colorations et/ou des troubles locaux de la couche de gel.

Il est bien connu d'ajouter à des milieux corrosifs, des inhibiteurs de corrosion qui ont pour effet de diminuer sensiblement la vitesse de corrosion (Herbert H. Uhlig : Korrosion und Korrosionsschutz, Akademie Verlag, Berlin 1970 Pp 236 à 250). Mais le nombre de substances différentes qui peuvent être utilisées comme inhibiteurs de corrosion est important. On sait également que l'action anti-corrosion des différentes substances dépend fortement des caractéristiques et de la composition du milieu. Cependant les conditions de fonctionnement qui interviennent sont peu ou mal connues de sorte que, lorsque, comme ici, le milieu où s'effectue la corrosion est complexe, l'état actuel des connaissances exclut que l'on puisse prévoir quelles sont les substances inhibitrices de la corrosion à préconiser dans chaque cas.

La présente invention vise à résoudre le problème précédemment évoqué en développant un vitrage résistant au feu du type cité plus haut, dans lequel est évité le risque de perturbations, colorations ou troubles du gel provoqués par la corrosion sur le châssis métallique d'écartement.

Ce problème est résolu selon l'invention par le fait que l'hydrogel à teneur en sel renferme, comme additif, une substance anticorrosive soluble dans l'eau.

Dans le cas de vitrage de protection contre les incendies selon la présente invention, contrairement aux mesures usuelles pour empêcher la corrosion, à savoir le choix de substances résistant à la corrosion ou le revêtement du matériau se corrodant par des enduits appropriés, l'agent anti-corrosif est ajouté directement au milieu agressif provoquant la corrosion. On obtient ainsi que toutes les parties du châssis d'écartement, qui viennent en contact avec la solution saline agressive, viennent obligatoirement de la même manière en contact également avec l'agent anti-corrosif. Les conséquences des effets corrosifs du gel agressif, qui sont provoquées, d'une part, par la solution saline agressive, mais également, d'autre part, par les additifs à la solution formant le gel, qui sont nécessaires pour le déroulement de la polymérisation, en particulier par le système catalytique agissant de façon fortement oxydante pour entamer le processus de polymérisation pour la formation du gel, après le remplissage, par la solution à teneur en sel, de l'espace séparant les plaques de verre, peuvent être entièrement évitées par l'addition, selon la présente invention, d'un agent anti-corrosif approprié.

Etant donné que le gel présente déjà une composition complexe, à savoir qu'il renferme, en dehors d'une concentration saline élevée, un système polymère et, en outre encore un système catalyseur, on ne pouvait pas prévoir que, dans ces conditions inhabituelles, l'addition de substances anti-corrosives conduirait au résultat souhaité, sans perturbation de la totalité du système et sans influence défavorable sur d'autres propriétés du gel. La couche de gel doit en effet surtout rester parfaitement transparente et incolore, et le déroulement de la réaction de polymérisation ne doit pas être gêné par l'addition de la substance anti-corrosive.

Comme substances anti-corrosives solubles dans l'eau, se sont révélés comme étant appropriés pour le présent objectif, les phosphates alcalins, les tungstates alcalins et les molybdates alcalins. En particulier, se sont révélés comme efficaces, pour l'objectif de l'invention, différents phosphates de sodium, comme le pyrophosphate de sodium ($Na_4P_2O_7$, 10 $H_2O$), l'hydrogénophosphate de sodium ($Na_2HPO_4$, 12 $H_2O$), et le phosphate trisodique ($Na_3PO_4$). Les composés peuvent être introduits, soit individuellement, soit sous forme de mélange de plusieurs de ces composés.

Dans ce qui suit, on donnera quelques exemples de réalisation pour la fabrication de vitrages de protection contre l'incendie selon l'invention en liaison avec les figures qui représentent:

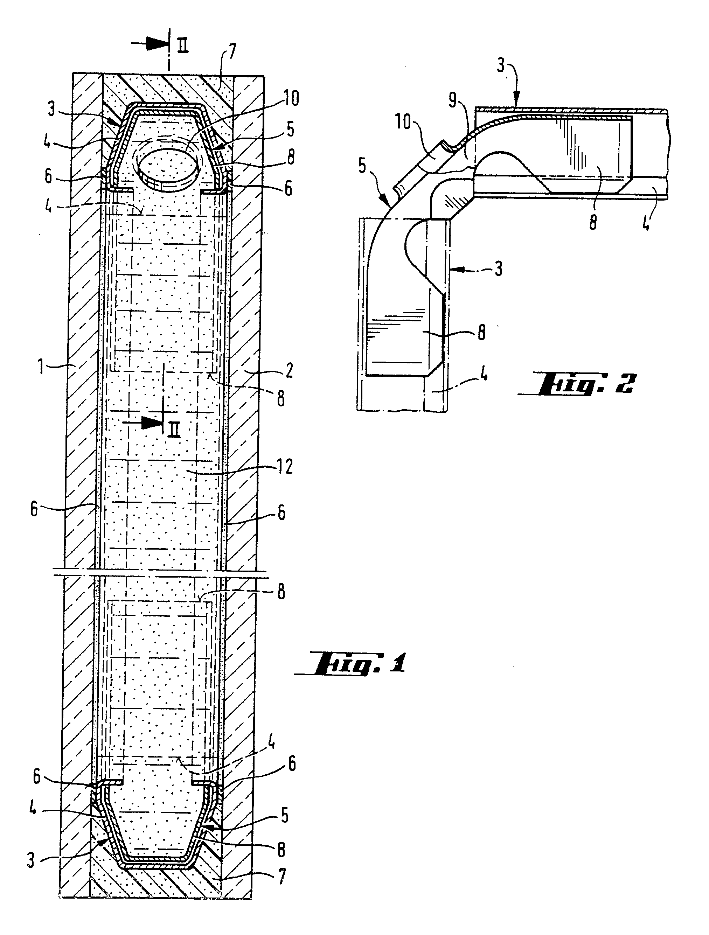

. figure 1 : une coupe d'un vitrage de protection contre l'incendie, rempli d'un hydrogel,
. figure 2 : une vue en coupe selon la ligne II-II de la figure 1.

Deux plaques en verre au silicate 1, 2 trempé sont reliées ensemble par l'intermédiaire d'un châssis ou cadre d'écartement métallique 3. Le châssis d'écartement 3 est composé de sections droites 4 de profilé métallique sensiblement en forme de U en coupe transversale ; ces sections droites 4 étant reliées par des pièces d'angle ou de raccordement 5. Le châssis d'écartement 3, composé des sections droites 4 et des pièces d'angle 5, est collé, par une colle 6, aux deux plaques de verre 1, 2. La gorge périphérique à l'extérieur du châssis d'écarte-ment 3 limitée par les bords des plaques de verre, est remplie d'une masse d'étanchéité adhésive 7.

Les pièces d'angle ou de raccordement 5 présentent, entre les deux branches encastrées 8, une section de liaison 9, formant, par rapport à chacune de ces dernières, un angle de 45°. Cette section de liaison 9 est dotée d'une ouverture 10. L'ouverture 10 sert pour le remplissage de l'espace situé entre les vitres par le liquide destiné à former la couche intercalaire de gel 12 et pour le dégazage dudit espace intercalair pendant le processus de remplissage.

Les sections droites 4 ou profilées les pièces d'angle ou de raccordement 5 se composent de tôle d'acier résistant à la corrosion avec, par exemple, 18 % de chrome, 12% de nickel et 2,25% de molybdène. Même si les sections droites 4 et les pièces d'angle ou de raccordement 5 se composent de tôle résistant à la corrosion, il peut se produire tout de même occasionnellement des phénomènes de corrosion, et notamment en particulier aux endroits de coupe qui sont rugueux ou sur les zones fortement déformées des pièces d'angle.

Lors de la fabrication du vitrage de protection contre les incendies, on forme d'abord le châssis d'écartement 3 par raccordement des sections droites 4 et des pièces d'angle 5. Ensuite, sur le châssis d'écartement 3, on étale des couches de colle 6. Le châssis d'écartement ainsi revêtu est collé avec les deux plaques de verre 1, 2. Ensuite l'espace intercalaire délimité par les plaques de verre et le châssis d'écartement est rempli entièrement par l'ouverture 10 par coulée d'une solution polymérisable. Pour la formation du gel ou la polymérisation de la solution, on utilise des monomères solubles dans l'eau, en particulier à base de dérivés de l'acide acrylique, qui polymérisent dans la solution aqueuse. La polymérisation est amorcée par addition d'un système catalytique formé d'un composant catalyseur, par exemple un peroxyde, et d'un composant accélérateur, par exemple le diéthylaminopropionitrile (DEAPN) ou la triéthanolamine dans le glycol (TEAG). Eventuellement, un autre agent de réticulation, comme, par exemple, le N, N' - méthylènebisacrylamide (MBA), peut être ajouté. Dès que la solution introduite est polymérisée pour donner un hydrogel, les ouvertures 10 sont fermées et la cavité à l'extérieur du châssis d'écartement est remplie par la masse d'étanchéité adhésive durcissable 7.

Dans ce qui suit, on donne quelques exemples de réalisation pour la composition chimique de la solution formant la couche de gel 12.

EXEMPLE 1

600 g d'eau
200 g de $MgCl_2$,6 $H_2O$
40 g d'acrylamide
40 g de N-méthylolacrylamide
2 g de diéthylaminopropionitrile(DEAPN)
0,05 g de N, N'-méthylènebisacrylamide (MBA)
2 g de $Na_2WO_4$

sont mélangés ensemble et la solution est dégazée. Le pH de la solution est réglé à une valeur de 8,5 à 9,0. Ensuite, 13 g d'une solution de persulfate d'ammoniun à 5 % sont ajoutés et mélangés sous agitation. La solution obtenue est introduite dans l'espace intermédiaire du double vitrage préparé et le remplit. Au bout de 30 minutes, la solution est entièrement polymérisée pour donner l'hydrogel.

Les vitrages de protection contre l'incendie ainsi fabriqués ne présentent aucun phénomène de corrosion même dans des conditions d'essais sévères.

EXEMPLE 2

820 g d'eau
180 g de NaCl
7 g d'urée
45 g d'acrylamide
45 g de N-méthylolacrylamide
1,5 g de triéthanolamine (TEAG)
0,04 g de N, N'-méthylènebisacrylamide (MBA)
1 g de $Na_3PO_4$

sont mélangés ensemble et la solution obtenue est dégazée. Le pH de la solution est réglé à une valeur de 8,5 à 9,0. Ensuite, 15 g d'une solution de persulfate d'ammonium à 5 % ont été ajoutés et mélangés sous agitation. La solution ainsi obtenue a été introduite dans l'espace situé entre les plaques de verre, afin de remplir cet espace. Au bout de 20 minutes, la solution est totalement polymérisée pour donner l'hydrogel.

Les vitrages de protection contre l'incendie ainsi fabriqués ne présentent pas de phénomène de corrosion après des essais de longue durée dans des conditions d'essais sévères.

EXEMPLE 3

590 g d'eau
300 g de $CaCl_2, 2\ H_2O$
5 g d'urée
150 g de "ROCAGIL 1295" qui est une acrylamide de la Société "RHONE POULENC"
1 g de triéthanolamine (TEAG)
0,05 g de N, N'-méthylènebisacrylamide (MBA)
1 g de $Na_2WO_4$
1 g de $Na_2MoO_4$

ont été mélangés ensemble et la solution a été dégazée. Après réglage du pH à une valeur de 8,5 à 9, 12 g d'une solution de peroxodisulfate ($Na_2S_2O_8$) à 2,5 % ont été ajoutés et mélangés sous agitation. Cette solution obtenue a été introduite dans l'espace intermédiaire du double vitrage préparé, afin de remplir cet espace. Le temps qui s'est écoulé jusqu'à la polymérisation complète de l'hydrogel s'est élevé à environ 40 minutes.

Les vitrages de protection contre l'incendie ainsi fabriqués ne présentent aucun phénomène de corrosion, même dans des conditions d'essais sévères.

EXEMPLE 4

On a préparé une solution polymérisable pour donner un hydrogel à partir des composants suivants :

750 g d'eau
150 g de NaCl
7,5 g d'urée
35 g d'acrylamide
35 g de N-méthylolacrylamide
2 g de triéthanolamine (TEAG)
0,04 g de N, N'-méthylolacrylamide (MBA)
0,75 g de $Na_3PO_4$
0,75 g de $Na_2HPO_4$, 12 $H_2O$.

Ces composants ont été mélangés ensemble et la solution obtenue a été dégazée. Le pH de la solution a été réglé à une valeur de 8,5 à 9,0. Ensuite, on a introduit 20 g d'une solution de $Na_2S_2O_8$ aqueuse à 2,5 %. Après agitation de la solution, cette dernière a été introduite dans l'espace situé entre les plaques de verre, afin de remplir cet espace. Au bout de 20 minutes, la solution est totalement polymérisée pour donner l'hydrogel.

Des essais de corrosion sur les vitrages de protection contre l'incendie ainsi fabriqués n'ont présenté aucun phénomène de corrosion même aux températures élevées.

EXEMPLE 5

750 g d'eau
160 g de NaCl
180 g de "ROCAGIL 1295" de la Société "RHONE POULENC"
1,5 g de diéthylaminopropionitrile (DEAPN)
0,06 g de N, N'-méthylènebisacrylamide (MBA)
2 g de $Na_2HPO_4$

ont été mélangés ensemble et la solution obtenue a été dégazée. Le pH de la solution a été réglé à une valeur de 8,5 à 9,0. Ensuite, 25 g d'une solution de persulfate d'ammonium à 2,5 % ont été ajoutés et mélangés sous agitation. La solution ainsi obtenue a été introduite dans l'espace situé entre les plaques de verre, afin de remplir cet espace. Au bout de 25 minutes, la solution est totalement polymérisée pour donner l'hydrogel.

Les vitrages de protection contre l'incendie ainsi fabriqués ne présentent après des essais de longue durée dans des conditions sévères, aucun phénomène de corrosion.

**Revendications**

1. Vitrage résistant au feu comprenant deux plaques de verre maintenues à distance par un châssis métallique et dont l'espace intercalaire est étanchéifié à sa périphérie et rempli d'un hydrogel contenant de 70 à 90 % d'eau et de 10 à 30 % d'un sel soluble, hydrogel qui contient comme sel soluble NaCl, CaCl$_2$ ou MgCl$_2$ seuls ou en mélange, comme gélifiant en milieu aqueux, des dérivés de l'acide acrylique tels que l'acrylamide et la N-méthylolacrylamide, comme catalyseur de polymérisation, un oxydant tel qu'un péroxyde et un accélérateur, caractérisé en ce que l'hydrogel contenant le sel comporte comme additif une substance anti-corrosion constituée de phosphate alcalin, de tungstate alcalin et/ou de molybdate alcalin.

2. Vitrage résistant au feu selon la revendication 1, caractérisé en ce que la substance anti-corrosive se compose d'au moins un composé choisi parmi le pyrophosphate de sodium (Na$_4$P$_2$O$_7$,10H$_2$O), l'hydrogénophosphate de sodium (Na$_2$HPO$_4$, 12H$_2$O) et le phosphate trisodique (Na$_3$PO$_4$).

3. Vitrage résistant au feu selon l'une des revendications 1 ou 2, caractérisé en ce que la substance anti-corrosive est ajoutée en une quantité de 0,2 à 2 % en poids par rapport à la quantité de sel soluble dans l'eau.

4. Vitrage résistant au feu selon l'une des revendications 1 à 3, caractérisé en ce que l'hydrogel à teneur en sel et renfermant la substance anti-corrosive renferme, comme composant accélérateur du système catalytique pour la polymérisation de l'agent de formation de gel, le diéthylaminopropionitrile (DEAPN) ou la triéthanolamine dans le glycol (TEAG).

5. Vitrage résistant au feu selon la revendication 4, caractérisé en ce que l'hydrogel à teneur en sel renferme un agent de réticulation comme le N,N'-méthylènebisacrylamide (MBA).

## Claims

1. Fire-resistant pane, comprising two glass plates spaced apart by a metal frame and the intermediate space of which is sealed at its periphery and is filled with a hydrogel containing from 70 to 90% water and from 10 to 30% of a soluble salt, which hydrogel contains, as soluble salt, NaCl, CaCl$_2$ or MgCl$_2$ alone or in mixture, as gelling agent in aqueous medium, derivatives of acrylic acid such as acrylamide and N-methylolacrylamide, as polymerization catalyst, an oxidant such as a peroxide and an accelerator, characterized in that the hydrogel containing the salt comprises, as additive, an anti-corrosion substance constituted of alkaline phosphate, alkaline tungstate and/or alkaline molybdate.

2. Fire-resistant pane according to Claim 1, characterized in that the anti-corrosion substance is composed of at least one compound chosen from among sodium pyrophosphate (Na$_4$P$_2$O$_7$,10H$_2$O), sodium hydrogenophosphate (Na$_2$HPO$_4$, 12H$_2$O) and tribasic sodium phosphate (Na$_3$PO$_4$).

3. Fire-resistant pane according to one of Claims 1 or 2, characterized in that the anti-corrosion substance is added in a proportion of 0.2 to 2% by weight relative to the quantity of water-soluble salt.

4. Fire-resistant pane according to one of Claims 1 to 3, characterized in that the hydrogel having a salt content and containing the anti-corrosion substance contains, as accelerator component for the catalytic system for the polymerization of the gelling agent, diethylaminopropionitrile (DEAPN) or triethanolamine in glycol (TEAG).

5. Fire-resistant pane according to Claim 4, characterized in that the hydrogel having a salt content contains a cross-linking agent, such as N,N'-methylenebisacrylamide (MBA).

## Ansprüche

1. Feuerwiderstandsfähige Verglasung mit zwei durch einen metallischen Rahmen auf Abstand gehaltenen Glasscheiben, deren Zwischenraum am Rand abgedichtet und mit einem 70 bis 90 % Wasser und 10 bis 30 % eines löslichen Salzes enthaltenden Hydrogel gefüllt ist, das als lösliches Salz NaCl, CaCl$_2$ oder MgCl$_2$, jeweils allein oder in Mischung miteinander, als in wässriger Lösung gelbildende Stoffe Acrylsäurederivate wie Acrylamid und N-Methylolacrylamid, als Polymerisationskatalysator ein Oxidationsmittel wie ein Peroxid und einen Beschleuniger enthält, **dadurch gekennzeichnet,** daß das salzhaltige Hydrogel als Zusatz eine Korrosionsschutzsubstanz aus Alkaliphosphat, Alkali-Wolframat und/oder Alkalimolybdat enthält.

2. Feuerwiderstandsfähige Verglasung nach Anspruch 1, dadurch gekennzeichnet, daß die Korrosionsschutzsubstanz aus wenigstens einer der Zusammensetzungen Natriumpyrophosphat (Na$_4$P$_2$O$_7$ . 10 H$_2$O), Natriumhydro-

genphosphat (Ha₄ HPO₄ . 12 H₂O) und Trinatriumphosphat (Na₃ PO₄) besteht.

3. Feuerwiderstandsfähige Verglasung nach Anspruch 1 oder 2, dadurch gekennzeichnet, daß die Korrosionsschutzsubstanz in einer Menge von 0,2 bis 2 Gew.-% bezogen auf die Menge des wasserlöslichen Salzes zugesetzt wird.

4. Feuerwiderstandsfähige Verglasung nach einem der Ansprüche 1 bis 3, dadurch gekennzeichnet, daß das salzhaltige und die Korrosionsschutzsubstanz enthaltende Hydrogel als Beschleunigerkomponente des katalytischen Systems für die Polymerisation des Gelbildners Diäthylaminopropionitril (DEAPN) oder Triäthanolamin in Glykol (TEAG) enthält.

5. Feuerwiderstandsfähige Verglasung nach Anspruch 4, dadurch gekennzeichnet, daß das salzhaltige Hydrogel ein Vernetzungsmittel wie NN'- Methylenbisacrylamid (MBA) enthält.

Fig. 1

Fig. 2